# EUROPÄISCHE PATENTSCHRIFT

(11) **EP 2 335 018 B1**
(45) Veröffentlichungstag und Bekanntmachung des Hinweises auf die Patenterteilung: **27.05.2015**
(21) Anmeldenummer: 09782207.6
(22) Anmeldetag: 26.08.2009
(51) Int. Cl.: G01B 11/275

(54) **VERFAHREN UND VORRICHTUNG ZUR OPTISCHEN ACHSVERMESSUNG VON KRAFTFAHRZEUGEN**
METHOD AND DEVICE FOR OPTICALLY ALIGNING THE AXLE OF MOTOR VEHICLES
PROCÉDÉ ET DISPOSITIF POUR LE RÉGLAGE OPTIQUE DE LA GÉOMÉTRIE DE VÉHICULES AUTOMOBILES

(30) Priorität: 12.09.2008 DE 102008042024
(43) Veröffentlichungstag der Anmeldung: 22.06.2011
(73) Patentinhaber: Robert Bosch GmbH, 70442 Stuttgart (DE)
(72) Erfinder: NOBIS, Guenter, 72622 Nuertingen (DE); SCHOMMER, Stefan, 85716 Unterschleissheim (DE); MACCHIA, Adriano, 80798 Muenchen (DE); WAGMANN, Christian, 80797 Muenchen (DE); BACKES, Jochen, 80687 München (DE); UFFENKAMP, Volker, 71642 Ludwigsburg (DE)
(86) Internationale Anmeldenummer: PCT/EP2009/060989
(87) Internationale Veröffentlichungsnummer: WO 2010/028949

(56) Entgegenhaltungen:
- EP-A1- 1 717 547
- EP-A1- 1 887 317
- WO-A1-94/05969
- DE-A1- 19 757 763
- DE-A1- 19 934 864
- DE-C1- 4 212 426
- US-A- 5 675 515
- US-B1- 6 412 183

## Beschreibung

Die Erfindung betrifft ein Verfahren und eine Vorrichtung zur optischen Achsvermessung von Kraftfahrzeugen nach dem Oberbegriff des Anspruchs 1.

### Stand der Technik

Derartige Achsvermessungssysteme zeichnen sich durch eine berührungslose optische Vermessung von an den Fahrzeugrädern angebrachten Targets aus. Die Targets weisen optisch registrierbare Marken auf, die von Bildaufnahmeeinrichtungen aufgenommen und die Bilder der Marken von einer Auswerteeinheit mit den Mitteln der Bildverarbeitung ausgewertet werden.

Ein Verfahren und eine Vorrichtung mit einer Stereo-Kamera-Anordnung als Bildaufnahmeeinrichtung ist aus DE 42 12 426 C1 bekannt, bei der außerhalb der Achse eines Rades des Kraftfahrzeugs an der Stirnseite des Rades eine optisch registrierbare Marke angebracht ist. Zur Bestimmung der Raumlage der Raddrehachse werden die Räder in Drehung versetzt und während der Drehbewegung wird die um ihre Achse rotierende Marke von den Stereo-Kameras der Bildaufnahmeeinrichtung in aufeinanderfolgenden Bildern aufgezeichnet. Aus den aufgezeichneten Bildern der Marke wird von der Auswerteeinheit die Raumlage der Achse des Rades ermittelt. Dieses Achsvermessungssystem zieht beim Messvorgang kein lokales 3D-Koordinatensystem für die Marken heran, so dass zur Durchführung jeder neuen Messung das zu messende Rad erneut in Drehung versetzt werden muss.

Ein weiteres Achsvermessungssystem mit einer Stereo-Kamera-Anordnung ist aus DE 197 57 763 A1 bekannt. Neben den Marken für das Rad des Kraftfahrzeugs wird zusätzlich eine separate Bezugsmerkmalanordnung mit Bezugsmerkmalen eingesetzt. Mittels eines separaten Einmessvorgangs bei sich drehenden Rädern wird mittels der Marken am Rad ein lokales 3D-Koordinatensystem und die Raddrehachse zur Kompensation des Felgenschlages ermittelt. Der Messvorgang erfolgt bei stillstehendem Rad durch eine Aufnahme der Marken am Rad und der Bezugsmerkmale der Bezugsmerkmalanordnung. Die Aufnahme wird mittels der Auswerteeinheit mit bekannten Verfahren der Bildverarbeitung und Triangulation ausgewertet.

Bei den genannten Achsvermessungssystemen mit Stereo-Kamera-Anordnungen sind die Messeinheiten mit den Stereo-Kameras jeweils seitlich neben den Rädern angeordnet, so dass das Blickfeld der Kameras quer zur Fahrzeuglängsmittelebene auf die dort befindlichen optisch registrierbaren Marken bzw. auf an der Stirnfläche des Rades angebrachten Adapter als Markenträger, den sogenannte Targets gerichtet ist.

Bei einem aus WO 94/05969 A1 bekannten Achsvermessungssystem ist eine Mono-Kamera-Anordnung vorhanden, deren Blickfeld in Richtung der Fahrzeuglängsmittelebene auf an den Rädern angebrachten Targets gerichtet ist, wobei die Targets seitlich von den Rädern in den Raum abstehen und in das Blickfeld der Kameras ragen. Auf den Targets ist eine Vielzahl von Marken angebracht, die bekannte geometrische Merkmale und Zusammenhänge aufweisen, die der Auswerteeinheit bekannt sind. Beim Messvorgang werden mit einem einzelnen Bild die Marken von der Bildaufnahmeeinrichtung aufgenommen. Durch einen Vergleich der Geometrie und Zusammenhänge der aufgenommenen Marken mit den der Auswerteeinheit bekannten geometrischen Merkmalen und Zusammenhängen der Marken wird von der Auswerteeinheit die Orientierung des Targets bestimmt und daraus die Raumlage der Raddrehachse ermittelt.

Ein ähnliches Achsvermessungssystem mit einer Stereo-Kamera-Anordnung ist aus US 6 412 183 B1 bekannt.

Aufgabe der vorliegenden Erfindung ist es, ein Achsvermessungssystem mit einer Stereo-Kamera-Anordnung zu schaffen, das eine hohe Genauigkeit der Messergebnisse liefert, ohne höhere technische Anforderungen an die Bildaufnahmeeinrichtung und die Auswerteeinheit zu stellen. Das Achsvermessungssystem soll außerdem einen möglichst geringen Platzbedarf in der Servicewerkstatt erfordern.

### Offenbarung der Erfindung

Die Aufgabe der Erfindung wird mit den kennzeichnenden Merkmalen der unabhängigen Ansprüche gelöst.

Das erfindungsgemäße Achsvermessungssystem zeichnet sich im Wesentlich dadurch aus, dass in einem Einmessvorgang, bei dem mit mindestens drei Marken des Targets ein lokales 3D-Koordinatensystem festgelegt wird, eine Bestimmung einer Bezugsebene mittels einer signifikanten Marke des Targets durchgeführt wird. Weiterhin wird in einem Referenziervorgang mit einer in die Messeinheiten integrierten Referenziereinrichtung ein Messplatzbezugssystem für die Messeinheiten festgelegt. Mittels der Bezugsebene wird schließlich unter Berücksichtigung des Messplatzbezugssystems eine Fahrzeuglängsmittelebene ermittelt. In einem anschließenden Messvorgang wird eine Aufnahme von beim Einmessvorgang aufgenommenen Marken erfasst und deren Raumlage im lokalen 3D-Koordinatensystem von der Auswerteeinheit ermittelt.

Das erfindungsgemäße Achsvermessungssystem hat den Vorteil, dass der Referenzierungsaufwand zur Schaffung eines Messplatzbezugssystems reduziert und die Bestimmung eines lokalen 3D-Koordinatensystems für die Marken der Targets genauer und robuster wird. Der Messvorgang kommt mit den Marken des Targets aus, die auch beim Einmessvorgang zum Einsatz kommen.

Durch die Kombination des Referenziervorganges zur Festlegung des Messplatzbezugssystems und des Einmessvorgangs zur Bestimmung des lokalen 3D-Koordinatensystems entfällt das Platzieren einer Bezugsmerkmalanordnung während des Messvorganges. Das Messplatzbezugssystem wird durch die in die Messeinheiten integrierte Referenziereinrichtung erzeugt. Durch den Wegfall zusätzlicher Bezugsmerkmalanordnungen sind folglich weniger Handgriffe zur Vorbereitung des Messvorgangs bei der Referenzierung notwendig. Das Verfahren wird dadurch für das Servicepersonal in der Werkstatt einfacher handhabbar und schneller durchführbar.

Dadurch, dass die Messeinheiten seitlich an den Fahrschienen der Hebebühne befestigt sind, erfordert die Achsvermessungseinrichtung insgesamt wenig Platz in der Servicewerkstatt und eine zusätzliche mechanische Höhenverstellung zur Messung bei angehobenem Fahrzeug entfällt. Darüber hinaus ermöglicht das Gesamtkonzept der Achsvermessungseinrichtung durch die dreidimensionale Messung der einzelnen unbestimmten Marken, dass die Oberfläche der Targets, auf der sich die Marken befinden, nicht eben sein muss, wie bei einer Achsvermessungseinrichtung mit einer Mono-Kamera-Anordnung, die vorbestimmte Marken am Target erfordern. Dadurch sind die Targets auch unempfindlich gegenüber Veränderungen durch Temperatur oder Veränderungen durch mechanische Einflüsse, die die Lage der Marken zueinander verändern könnten.

Vorteilhafte Weiterbildungen der Erfindung sind durch die Maßnahmen der Unteransprüche möglich.

Besonders vorteilhaft ist es, wenn als Bezugsebene eine definierte Radmittelebene herangezogen wird. Die Radmittelebene wird von einer durch die Radfelge verlaufenden Mittelebene definiert.

Mittels der Bezugsebene lässt sich unter Berücksichtigung des Messplatzbezugssystems eine Fahrzeuglängsmittelebene ermittelt. Eine besonders präzise Bestimmung der Fahrzeuglängsmittelebene wird erzielt, wenn der Abstand einer signifikanten Marke von der als Bezugsebene festgelegten Radmitteleben der Auswerteeinheit bekannt ist. Außerdem können beim Einmessvorgang neben der signifikanten Marke mindestens zwei unbestimmte Marken zur Bestimmung des lokalen 3D-Koordinatensystems und der Raumlage der Raddrehachse herangezogen werden.

Beim Einmessvorgang wird das Kraftfahrzeug von einer Ausgangsposition in eine Endposition bewegt, wobei die an den Rädern angebrachten Targets mit einem Drehwinkel von 50° bis 70° um die Raddrehachse bewegt werden. Während des Abrollens der Räder und der Drehbewegung der Targets wird von den unbestimmten Marken und von der signifikanten Marke des Targets jeweils eine Bildfolge von 20 bis 30 Bilder/sec. aufgenommen. Aus der gemeinsamen Auswertung aller Messungen einer Bildfolge werden beim Einmessvorgang mit den mindestens drei Marken des Targets, von denen eine die signifikante Marke ist, das lokale 3D-Koordinatensystem, die Raddrehachse zur Kompensation des Felgenschlages und des Schlages der Targethalterung und die Bezugsebene nach bekannten Ausgleichungsmethoden robust und zuverlässig bestimmt.

Insbesondre dadurch, dass das Messplatzbezugssystem der Messeinheiten und das lokale 3D-Koordinatensystem der Marken vor jeder Messung neu bestimmt werden, ist eine hohe Genauigkeit der Achsvermessung gewährleistet.

### Ausführungsbeispiel

Ein Ausführungsbeispiel der Erfindung ist in der Zeichnung dargestellt und in der nachfolgenden Beschreibung näher erläutert.

Es zeigen:
- Figur 1: eine schematische Draufsicht auf einen Messplatz einer Achsvermessungseinrichtung und
- Figur 2: eine Ansicht eines Targets mit einer Targethalterung und einer schematischen Darstellung einer Radfelge.

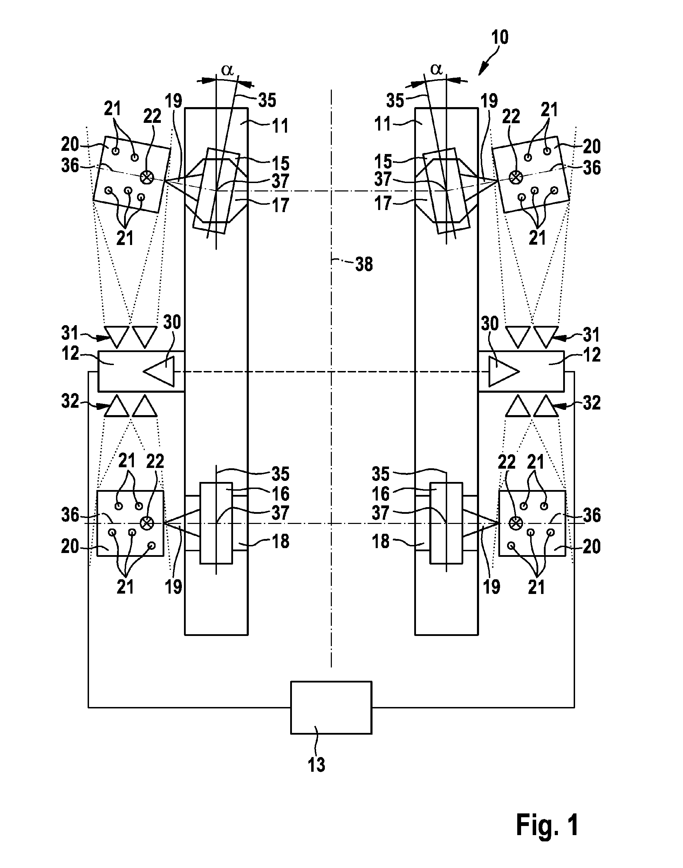

Die in Figur 1 in Draufsicht dargestellte Achsvermessungseinrichtung umfasst eine Hebebühne 10 mit zwei Fahrschienen 11, an denen seitlich jeweils eine Messeinheit 12 mit Bildaufnahmeeinrichtungen befestigt ist. Die Messeinheiten 12 stehen mit einer Auswerteeinheit 13 in Verbindung, die eine an sich bekannte Bildverarbeitungssoftware enthält. Auf den Fahrschienen 11 ist ein Fahrzeug mit zwei Vorderrädern 15 und zwei Hinterrädern 16 mit jeweils eingezeichneten Raddrehachsen 36 angedeutet. Die Vorderräder 15 stehen dabei auf drehbar gelagerten Aufstellplatten 17 und die Hinterräder 16 auf axial verschiebbar gelagerten Aufstellplatten 18. Weiterhin ist eine in Fahrtrichtung verlaufende Fahrzeuglängsmittelebene 38 des Kraftfahrzeugs sowie ein Radmittelebene 35 der Räder 15, 16 dargestellt. Der Schnittpunkt der Raddrehachse 36 mit der Radmittelebene 35 bildet ein Raddrehzentrum 37. Die Fahrzeuglängsmittelebene 38 wird dabei aus der Mitte der Spurweite der Vorderräder 15 und der Hinterräder 16 ermittelt. Die Mitte der Spurweite einer Achse ergibt sich aus der Verbindung der Raddrehzentren 37 der Räder 15, 16 einer Achse.

An den beiden Vorderrädern 15 und den beiden Hinterrädern 16 sind jeweils Targethalterungen 19 angebracht, an denen seitlich in den Raum abstehende, paddelförmige Targets 20 befestigt sind. Die Targets 20 besitzen eine im Wesentlichen ebene Fläche, auf der jeweils von den Bildaufnahmeeinrichtungen erfassbare, optisch registrierbare Markierungen angeordnet sind. Als optische registrierbare Markierungen dienen eine Vielzahl von unbestimmten Marken 21 und jeweils eine signifikante Marke 22. Die unbestimmten Marken 21 besitzen keine vorbestimmte Lage auf dem Target 20. Die Lage der unbestimmten Marken 21 ist somit der Auswerteeinheit 13 nicht bekannt. Insofern können sich die unbestimmten Marken 21 auf den vier verwendeten Targets 20 für die einzelnen Räder 15, 16 unterscheiden.

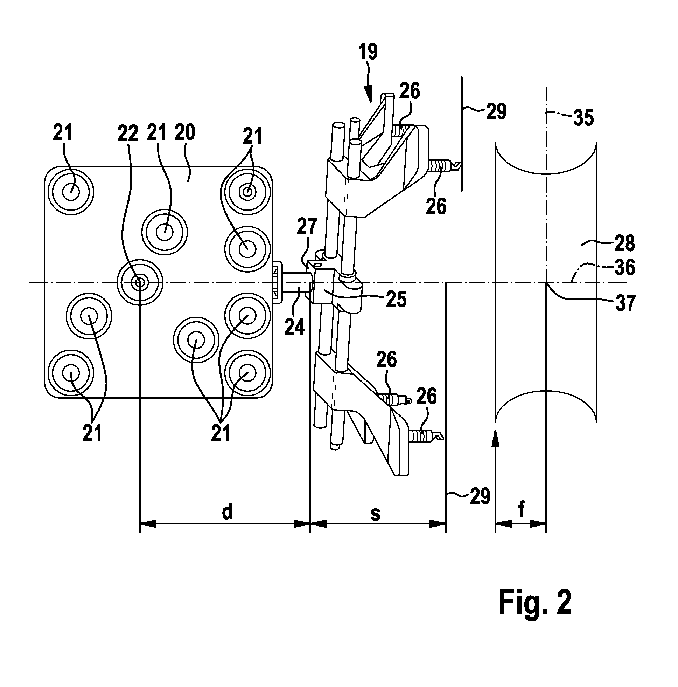

Die signifikante Marke 22 weist gemäß Figur 2 im vorliegenden Ausführungsbeispiel bei allen vier Targets 20, zumindest jedoch bei den Targets 20 der gleichen Achse einen gleichen Abstand d zu einer Bezugsfläche 27 an der Targethalterung 19 auf, wie später noch näher beschrieben wird, wobei der Abstand d entlang einer Steckachse der Targethalterung 19 gemessen wird. Vorzugsweise ist der Abstand d der signifikanten Marke 22 der Auswerteeinheit 13 bekannt.

Die beiden Messeinheiten 12 besitzen als Bildaufnahmeeinrichtungen jeweils eine erste Stereo-Kamera-Anordnung 31, die jeweils die an den Vorderrädern 15 angeordneten Targets 20 erfassen, und jeweils eine zweite Stereo-Kamera-Anordnung 32, die jeweils die an den Hinterrädern 16 angeordneten Targets 20 erfassen. Jede Messeinheit 12 umfasst ferner eine Referenziereinrichtung 30 mit einer Sende-/Empfangseinheit jeweils für die gegenüberliegende Messeinheit 12. Mit den in die Messeinheiten 12 integrierten Referenziereinrichtungen 30 wird die Richtung der Messeinheiten 12 zum Erdschwerefeld als Bezug für den Sturz sowie die Ausrichtung und der Abstand der Messeinheiten 12 zueinander zur Bestimmung der Spur und der Spurweite bestimmt. Durch den Referenziervorgang wird ein Messplatzbezugssystem für die Messeinheiten 12 festgelegt, welches der Auswerteeinheit 13 übermittelt wird. Es ist somit keine zusätzliche Bezugsanordnung zur Festlegung eines Messplatzbezugssystems notwendig. Die Achsvermesseinrichtung ist gegenüber Veränderungen der Position der Messeinheiten 12 während der Messung unempfindlich; eine Referenzierung der Messeinheiten 12 ist vor und/oder kontinuierlich während jedem Messvorgang möglich. Dadurch, dass keine zusätzlichen mechanischen Einheiten zum Verstellen der Messeinheiten 12 notwendig sind, ist kein zusätzlicher Platz vor, hinter oder neben der Hebebühne 10 oder dem Kraftfahrzeug notwendig. Die Referenzierung der Messeinheiten ermöglicht einen absoluten Bezug der Messeinheiten 12 zueinander, ohne dass zusätzliche Marken an der Hebebühne 10 oder am Kraftfahrzeug anzubringen sind.

Eine nähere Darstellung eines Targets 20 geht aus Figur 2 hervor. Das Target 20 ist mit einem Bolzen 24 in einer Aufnahme 25 an der Targethalterung 19 befestigt, die mit Aufnahmebolzen 26 an einem Felgenhorn einer angedeuteten Radfelge 28 der Räder 15, 16 verspannt werden. Die Targethalterung 19 weist ferner an der Aufnahme 25 eine Anschlagfläche für den Bolzen 24 des Targets 20 auf, welche die Bezugsfläche 27 bildet. Der Anschlag für die Bezugsfläche 27 hat bei allen Targethalterungen 19, zumindest jedoch bei den Targethalterungen 19 der gleichen Achse einen gleichen Abstand s, gemessen von einer Auflagefläche 29 an den Aufnahmebolzen 26, mit welcher die Targethalterungen 19 am Felgenhorn der Radfelge 28 anliegt. Weiterhin ist ein Maß f zwischen der Auflagefläche 29 für die Aufnahmebolzen 26 am Felgenhorn und der Radmittelebene 35 bekannt, das ebenfalls bei allen Rädern 15, 16 des Fahrzeugs gleich ist. Die Radmittelebene 35 ist festgelegt als eine Ebene, die senkrecht zur Drehachse 36 des Rades 15, 16 verläuft und durch die Mitte der Radfelge 28 führt. Der Abstand f ist fahrzeugspezifisch und ist der Auswerteeinheit 13 bekannt. Der Abstand d der signifikanten Marke 22 bis zur Bezugsfläche 27 sowie der Abstand s sind ebenfalls der Auswerteeinheit 13 bekannt. Daraus ergibt sich ein der Auswerteeinheit 13 bekannter Gesamtabstand a der signifikanten Marke 22 von der Radmittelebene 35 nach a = d + s + f. Die Kenntnis des Abstands a ist erforderlich, um bei einem später beschriebenen Einmessvorgang die Fahrzeuglängsmittelebene 38 für das zu vermessende Fahrzeug im Messplatzbezugssystem zu ermitteln.

Zur Achsvermessung eines Kraftfahrzeugs wird zunächst das Kraftfahrzeug auf die Fahrschienen 11 der Hebebühne 10 gefahren, so dass die Räder 15, 16 in einer ersten Position etwa in der Mitte der Aufstellplatten 17 positioniert sind. In dieser Stellung werden die Targets 20 mittels der Targethalterung 19 an den Radfelgen 28 der Räder 15, 16 befestigt. Die Lage der Targets 20 in dieser Position wird dabei so gewählt, dass die Stereo-Kamera-Anordnungen 31, 32 der beiden Messeinheiten 12 die Marken 21, 22 des jeweilige Targets 20 erfassen können.

Zur Vorbereitung des Einmessvorgangs wird das Fahrzeug in eine zweite Position zurückgerollt, die die Ausgangsposition für den Einmessvorgang bildet. Der Einmessvorgang wird gestartet, indem das Kraftfahrzeug wieder vorwärts in Richtung zu der ersten Position bewegt wird, so dass die Räder 15 16 auf den Aufstandsplatten 17, 18 bis in eine dritte Position abrollen, die die Endposition des Einmessvorgangs darstellt. Für die weitere Messung wird das Fahrzeug in etwa wieder auf die erste Position bewegt, so dass sich die Räder 15 dann wieder in etwa in der Mitte der Aufstandsplatten 17 befinden.

Während des Einmessvorgangs rollen durch Bewegen des Kraftfahrzeuges von der Ausgangsposition in die Endposition die Räder 15, 16 auf den Fahrschienen 11 beispielsweise um einen Drehwinkel von 50° bis 70°, vorzugsweise um 60° ab, wobei sich die Targets 20 mit den Rädern 15, 16 um den gleichen Betrag mitdrehen. Während des Vorwärtsrollens der Räder 15, 16 werden beim Einmessvorgang von der jeweiligen Stereo-Kamera-Anordnung 31, 32 von der signifikanten Marke 22 sowie von mindestens zwei unbestimmten Marken 21 jeweils eine Bildfolge von mindesten drei Bilder aufgenommen. Die Auswerteeinheit 13 ermittelt aus der Bildfolge der Marken 21, 22 ein lokales 3D-Koordinatensystem, die Raumlage der Raddrehachse 36 im lokalen 3D-Koordinatensystem zur Kompensation des Felgenschlages und des Schlages der Targethalterung 19. Weiterhin wird mittels der signifikanten Marke 22 eine Bezugsebene im lokalen 3D-Koordinatensystem bestimmt. Anhand des bekannten Abstands a der signifikanten Marke 22 von der Radmittelebene 35 wird im vorliegenden Ausführungsbeispiel als Bezugsebene die Radmitteleben 36 ermittelt. Die Daten werden für den nachfolgenden Messvorgang in der Auswerteinheit 13 hinterlegt. Unter der Voraussetzung, dass die signifikante Marke 22 zumindest an den Targets 20 der Räder 15, 16 der gleichen Achse den gleichen Abstand d von der Bezugsfläche 27 aufweisen, wird von der Auswerteeinheit weiterhin mittels der bestimmten Bezugsebene unter Berücksichtigung des ermittelten Messplatzbezugssystems die Fahrzeuglängsmittelebene 38 bestimmt. In diesem Fall muss der Abstand d der Auswerteinheit nicht bekannt gemacht werden. Gemäß dem vorliegenden Ausführungsbeispiel wird es jedoch als zweckmäßig erachtet, anhand des bekannten Abstands a der signifikanten Marke 22 von der Radmittelebene 36, der der Auswerteeinheit gekannt gemacht wird, als Bezugebene die Lage der Radmitteleben 36 im lokalen 3D-Koordinatensystem herzuziehen. Unter Berücksichtigung des vorher bestimmten Messplatzbezugssystems wird dann anhand der bestimmten Lage der Radmittelebene 36 die Fahrzeuglängsmittelebene 38 ermitteln.

Zur Erhöhung der Genauigkeit werden beim vorliegenden Ausführungsbeispiel beim Einmessvorgang und beim nachfolgenden Messvorgang mehr als zwei unbestimmte Marken 21 herangezogen und von den Stereo-Kamera-Anordnungen 31, 32 jeweils 25 bis 30 Bilder/sec. von jeder Marke 21, 22 aufgenommen.

Nach dem Einmessvorgang wird das Kraftfahrzeug, dass sich mit seinen Rädern 15 in der Mitte der Aufstellplatten 17 befindet, dem eigentlichen Messvorgang zur Achsvermessung unterzogen. Dazu sind jedoch vorher die Aufstellplatten 17, 18 zu entriegeln, so dass sich die Räder 15, 16 von der von den Reifen auf die Räder 15, 16 wirkende Vorspannung entspannen können. Dadurch nimmt jedes Rad 15, 16 die Lage ein, auf die sich die vom Hersteller bereitgestellten Sollwerte beziehen.

Vor dem Messvorgang oder kontinuierlich während jeder Bildaufnahme des Messvorgangs erfolgt der bereits beschriebene Referenziervorgang für die Messeinheiten 12 mittels der Referenziereinrichtungen 30, so dass der Auswerteeinheit 13 die Lage der Messeinheiten 12 im Messplatzbezugssystem bekannt ist. Der Referenziervorgang ist erst für den Messvorgang erforderlich, da die Stereo-Kamera-Anordnungen 31, 32 beim Einmessvorgang unabhängig voneinander arbeiten können. Ausnahmen liegen jedoch vor, wenn die Auswertung der Bildfolge nicht radweise, sondern achsweise oder sogar mit allen vier Rädern gemeinsam erfolgt. In diesen Fällen wird der Referenziervorgang vor dem Einmessvorgang durchgeführt. In diesen Ausnahmefällen muss das Messplatzbezugssystem beim Einmessvorgang bekannt sein.

Beim Messvorgang zur Bestimmung der Achsgeometrie, wie Spur und Sturz, wird dann von jedem Target 20 jeweils eine Aufnahme von den beim Einmessvorgang herangezogenen mindestens drei Marken 21, 22 vorgenommen. Eine bevorzuge Ausführung besteht darin, beim Messvorgang die signifikante Marke 22 nicht heranzuziehen. In diesem Fall ist es jedoch erforderlich beim Einmessvorgang zusätzlich zu der signifikanten Marke 22 mindestens drei unbestimmte Marken 21 zur Bestimmung des lokalen 3D-Koordinatensystems heranzuziehen. Beim nachfolgenden Messvorgang werden dann zumindest die beim Einmessvorgang herangezogenen drei gleichen unbestimmten Marken 21 aufgenommen. Die von den Stereo-Kamera-Anordnungen 31, 32 aufgenommenen Bilder der mindestens drei Marken 21 werden von der Bildaufnahmeinrichtung mit bekannten Mitteln der Bildverarbeitung ausgewertet und die 3D-Koordinaten der Marken 21 mit dem bekannten Verfahren der Triangulation bestimmt. Aus den ermittelten 3D-Koordinaten wird von der Auswerteeinheit 13 unter Berücksichtung des im Einmessvorgangs festgelegten lokalen 3D-Koordinatensystems die Radgeometrie, wie die Raumlage der Raddrehachse 36 unter Kompensation des Felgenschlages und des Schlages der Targethalterungen 19 berechnet.

Weiterhin ergibt sich aus den Berechnungen die Lage der Radmittelebene 35 im Messplatzbezugssystem, woraus sich dann die Fahrzeuglängsmittelebene 38 als Bezug für die Einzelspur der Hinterräder bestimmen lässt.

Schließlich wird aus der Raumlage der Raddrehachse 36 der Winkel α für die Spur und der zur Senkrechten zur Zeichnungsebene liegende und nicht dargestellte Winkel für den Sturz des jeweiligen Rades 15, 16 ermittelt.

## Patentansprüche

1. Verfahren zur optischen Achsvermessung von Rädern (15, 16) eines Kraftfahrzeugs, bei dem in einem Messvorgang mittels einer Messeinheit (12) von jeweils mindestens drei Marken (21, 22) mindestens zweier Targets (20), welche an den zwei Rädern (15, 16) mindestens einer Achse durch Targethalterungen (19) angebracht sind, mindestens eine stereoskopischen Aufnahme aufgenommen wird und daraus von einer Auswerteeinheit (13) die Raumlage der Raddrehachse (36) in einem vorher bestimmten lokalen 3D-Koordinatensystem mittels eines Verfahrens der Bildverarbeitung ermittelt wird und bei dem in einem Referenziervorgang ein Messplatzbezugssystem für die Messeinheit (12) festgelegt wird, wobei vor dem Messvorgang ein Einmessvorgang durchgeführt wird, bei dem sich die Targets (20) um die Raddrehachse (36) drehen und dabei mit den mindestens drei Marken (21, 22) des Targets (20) das lokale 3D-Koordinatensystem festgelegt und die Raumlage der Raddrehachse (36) ermittelt wird, und wobei beim anschließenden Messvorgang bei stillstehendem Rad (15, 16) und unbewegten Targets (20) von mindestens den beim Einmessvorgang herangezogenen mindestens drei Marken (21, 20) des Targets (20) deren Raumlage im lokalen 3D-Koordinatensystem ermittelt wird, wobei beim Einmessvorgang eine Bestimmung einer Bezugsebene mittels einer signifikanten Marke (22) des Targets (20) durchgeführt wird, wobei die signifikante Marke (22) an den Targets (20) der Räder (15, 16) der gleichen Achse einen gleichen Abstand (d) von einer Bezugsfläche (27) der Targethalterung (19) aufweist und wobei mittels der Bezugsebene unter Berücksichtigung des Messplatzbezugssytems eine Fahrzeuglängsmittelebene (38) ermittelt wird.

2. Verfahren nach Anspruch 1, **dadurch gekennzeichnet, dass** als Bezugsebene eine Radmittelebene (35) herangezogen wird, und dass die signifikante Marke (22) zur Radmittelebene (35) einen der Auswerteeinheit bekannten Abstand (a) aufweist.

3. Verfahren nach einem der Ansprüche 1 bis 2, **dadurch gekennzeichnet, dass** beim Einmessvorgang das Kraftfahrzeug von einer Ausgangsposition in eine Endposition bewegt wird, wobei die an den Rädern (15, 16) angebrachten Targets (20) mit einem Drehwinken von 50° bis 70° um die Raddrehachse (36) bewegt werden.

4. Verfahren nach einem der Ansprüche 1 bis 3, **dadurch gekennzeichnet, dass** während des Abrollens der Räder (16, 16) von den unbestimmten Marken (21) und von der signifikanten Marke (22) des Targets (20) jeweils eine Bildfolge von 20 bis 30 Bilder/sec. aufgenommen wird.

5. Verfahren nach einem der Ansprüche 1 bis 4, **dadurch gekennzeichnet, dass** der Referenziervorgang vor dem Messvorgang oder kontinuierlich während jeder Bildaufnahme des Messvorgangs erfolgt.

6. Verfahren nach einem der Ansprüche 1 bis 5, **dadurch gekennzeichnet, dass** der Referenziervorgang vor dem Einmessvorgang erfolgt.

7. Vorrichtung zur optischen Achsvermessung von Rädern (15, 6) eines Kraftfahrzeugs mit an den zu vermessenden Rädern (15, 16) durch Targethalterungen (19) angebrachten Targets (20), die mit optisch registrierbaren Marken (21, 22) ausgestattet sind, und mit Messeinheiten (12), die zur Aufnahme der Marken (21, 22) mindestens eine Stereo-Kamera-Anordnung (31, 32) als Bildaufnahmeeinrichtung aufweisen, wobei in einem Messvorgang mittels der Messeinheiten (12) von mindestens drei Marken (21, 22) des Targets (20) mindestens eine stereoskopischen Aufnahme aufgenommen wird und daraus von einer Auswerteeinheit (13) die Raumlage der Raddrehachse (36) in einem lokalen 3D-Koordinatensystem mittels eines Verfahrens der Bildverarbeitung ermittelt wird, wobei die Messeinheiten (12) neben den Stereo-Kamera-Anordnungen (31, 32) eine Referenziereinrichtung (30) enthalten, mit welcher die Lage der Messeinheiten (12) in einem Messplatzbezugssystem bestimmbar ist, und wobei auf dem Target (20) zusätzlich zu mindestens zwei unbestimmten Marken (21) eine weitere signifikante Marke (22) positioniert ist, welche zumindest an den Targets (20) der Räder (15, 16) der gleichen Achse einen gleichen Abstand (d) von einer Bezugsfläche (27) an der Targethalterung (19) aufweist und wobei durch die Auswerteeinheit (13) die Bezugsebene mittels der signifikanten Marke (22) bestimmbar ist und mittels der Bezugsebene unter Berücksichtigung des Messplatzbezugssystems eine Fahrzeuglängsmittelebene durch die Auswerteeinheit (13) bestimmbar ist.

8. Vorrichtung nach Anspruch 7, **dadurch gekennzeichnet, dass** der Auswerteeinheit (13) der Abstand (d) der signifikanten Marke (22) von der Bezugsfläche (27) bekannt ist.

9. Vorrichtung nach Anspruch 7 oder 8, **dadurch gekennzeichnet, dass** der Auswerteeinheit (13) ein Abstand (a) der signifikanten Marke (22) von einer Radmittelebene (35) bekannt ist, wobei die Radmittelebene (35) als Bezugsebene dient.

10. Vorrichtung nach Anspruch 9, **dadurch gekennzeichnet, dass** sich der Abstand (a) zusammensetzt aus dem bekannten Abstand (d) der signifikanten Marke (22) zur Bezugsfläche (27), einem bekannten Abstand (s) der Bezugsfläche (27) zu einer Aufspannebene (29) an einer Targethalterung (19) und einem bekannten Abstand (f) der Aufspannebene (29) zur Radmittelebene (35).

11. Vorrichtung nach Anspruch 7, **dadurch gekennzeichnet, dass** die Messeinheiten (12) seitlich an den Fahrschienen (11) angeordnet sind, derart, dass das Blickfeld der jeweilige Stereo-Kamera-Anordnung (31, 32) die Marken (21, 22) des jeweiligen Targets (20) erfassen.

## Claims

1. Method for the optical axle measurement of wheels (15, 16) of a motor vehicle, in which in a measurement operation a measuring unit (12) is used to take at least one stereoscopic picture of respectively at least three marks (21, 22) of at least two targets (20), which are attached to the two wheels (15, 16) of at least one axle by means of target holders (19), and an evaluation unit (13) uses a method of imaging processing to determine from said picture the spatial position of the wheel rotational axis (36) in a previously determined local 3D coordinate system, and in which in a referencing operation a measuring location reference system is set up for the measuring unit (12), there being carried out before the measurement operation a calibration operation in which the targets (20) rotate about the wheel rotational axis (36) while the local 3D coordinate system is set up and the spatial position of the wheel rotational axis (36) is determined with the aid of the at least three marks (21, 22) of the target (20), and during the subsequent measurement operation when the wheel (15, 16) is at rest and given stationary targets (20) the spatial position in the local 3D coordinate system is determined for at least the at least three marks (21, 22) of the target (20) which were used in the calibration operation, wherein during the calibration operation a significant mark (22) of the target (20) is used to determine a reference plane, the significant mark (22) on the targets (20) of the wheels (15, 16) of the same axle being at an equal distance (d) from a reference surface (27) of the target holder (19), and a vehicle longitudinal centre plane (38) being determined by means of the reference plane by taking account of the measuring location reference system.

2. Method according to Claim 1, **characterized in that** a wheel centre plane (35) is used as reference plane, and **in that** the significant mark (22) is at a distance (a), known to the evaluation unit, from the wheel centre plane (35).

3. Method according to either of Claims 1 and 2, **characterized in that** during the calibration operation the motor vehicle is moved from a starting position into an end position, the targets (20) attached to the wheels (15, 16) being moved about the wheel rotational axis (36) with an angle of rotation of 50° to 70°.

4. Method according to one of Claims 1 to 3, **characterized in that** during rolling of the wheels (15, 16) an image sequence of 20 to 30 images/sec is respectively recorded for the undetermined marks (21) and for the significant mark (22) of the target (20).

5. Method according to one of Claims 1 to 4, **characterized in that** the referencing operation is performed before the measurement operation or continuously each time that the measurement operation takes a picture.

6. Method according to one of Claims 1 to 5, **characterized in that** the referencing operation is performed before the calibration operation.

7. Device for the optical axle measurement of wheels (15, 16) of a motor vehicle, having targets (20) which are attached by target holders (19) to the wheels (15, 16) to be measured and are equipped with optically recordable marks (21, 22), and having measuring units (12) which have, as an image recording device, at least one stereo camera arrangement (31, 32) for recording the marks (21, 22), at least one stereoscopic picture of at least three marks (21, 22) of the target (20) being taken by means of the measuring units (12) in a measurement operation, and the spatial position of the wheel rotational axis (36) being determined therefrom in a local 3D coordinate system by an evaluation unit (13) with the aid of a method of image processing, wherein in addition to the stereo camera arrangements (31, 32) the measuring units (12) comprise a referencing device (30) which can be used to determine the position of the measuring units (12) in a measuring location reference system, and in addition to at least two undetermined marks (21) there being positioned on the target (20) a further significant mark (22) which, at least on the targets (20) of the wheels (15, 16) of the same axle is at an equal distance (d) from a reference surface (27) on the target holder (19), and wherein the evaluation unit (13) can determine the reference plane by means of the significant mark (22), and a vehicle longitudinal centre plane can be determined by the evaluation unit (13) with the aid of the reference plane by taking account of the measuring location reference system.

8. Device according to Claim 7, **characterized in that** the distance (d) of the significant mark (22) from the reference surface (27) is known to the evaluation unit (13).

9. Device according to Claim 7 or 8, **characterized in that** a distance (a) of the significant mark (22) from a wheel centre plane (35) is known to the evaluation unit (13), the wheel centre plane (35) serving as reference plane.

10. Device according to Claim 9, **characterized in that** the distance (a) is composed of the known distance (d) of the significant mark (22) from the reference surface (27), a known distance (s) of the reference surface (27) from a clamping plane (29) on a target holder (19) and a known distance (f) of the clamping plane (29) from the wheel centre plane (35).

11. Device according to Claim 7, **characterized in that** the measuring units (12) are arranged laterally on the running rails (11) in such a way that the field of view of the respective stereo camera arrangement (31, 32) acquires the marks (21, 22) of the respective target (20).

## Revendications

1. Procédé pour le réglage optique d'essieu de roues (15, 16) d'un véhicule automobile, dans lequel lors d'un processus de mesure à l'aide d'une unité de mesure (12) de respectivement au moins trois repères (21, 22) d'au moins deux cibles (20) placées par des supports de cible (19) au niveau des deux roues (15, 16) d'au moins un essieu, au moins un enregistrement stéréoscopique est enregistré et la position dans l'espace de l'axe de rotation de roue (36) est calculée par une unité d'analyse (13), à partir dudit enregistrement, dans un système de coordonnées 3D local déterminé au préalable à l'aide d'un procédé de traitement d'image, et dans lequel au cours d'un processus de référencement, un système de référence de l'endroit de la mesure est déterminé pour l'unité de mesure (12), sachant qu'avant le processus de mesure, un processus d'étalonnage est exécuté au cours duquel les cibles (20) tournent autour de l'axe de rotation de roue (36) et le système de coordonnées 3D local est défini avec les au moins trois repères (21, 22) de la cible (20) et la position dans l'espace de l'axe de rotation de roue (36) est calculée et sachant que l'on calcule, lors du processus de mesure suivant, lorsque la roue (15, 16) est à l'arrêt et que les cibles (20) sont immobiles, à partir des trois repères (21, 22) au moins de la cible (20) utilisés lors du processus d'étalonnage au moins dont la position dans l'espace est déterminée dans le système de coordonnées 3D local, sachant que lors du processus d'étalonnage, une détermination d'un plan de référence est effectuée au moyen d'un repère (22) significatif de la cible (20), le repère (22) significatif comportant une même distance (d) par rapport à une surface de référence (27) du support de cible (19) au niveau des cibles (20) des roues (15, 16) du même essieu et un plan médian longitudinal de véhicule (38) étant déterminé à l'aide du plan de référence en tenant compte du système de référence de l'endroit de la mesure.

2. Procédé selon la revendication 1, **caractérisé en ce que** le plan de référence utilisé est un plan médian de roue (35) et que le repère (22) significatif par rapport au plan médian de roue (35) présente une distance (a) connue par rapport à l'unité d'analyse.

3. Procédé selon l'une quelconque des revendications 1 à 2, **caractérisé en ce que** lors du processus d'étalonnage, le véhicule automobile est déplacé d'une position de départ dans une position finale, les cibles (20) placées au niveau des roues (15, 16) étant déplacées selon un angle de rotation de 50° à 70° autour de l'axe de rotation de roue (36).

4. Procédé selon l'une quelconque des revendications 1 à 3, **caractérisé en ce que** pendant le déroulement des roues (15, 16) en partant des repères (21) indéterminés et en partant du repère (22) significatif de la cible (20), une succession d'images de 20 à 30 images/sec. est respectivement enregistrée.

5. Procédé selon l'une quelconque des revendications 1 à 4, **caractérisé en ce que** le processus de référencement est réalisé avant le processus de mesure ou est réalisé en continu pendant chaque enregistrement d'image du processus de mesure.

6. Procédé selon l'une quelconque des revendications 1 à 5, **caractérisé en ce que** le processus de référencement se produit avant le processus d'étalonnage.

7. Dispositif pour le réglage optique d'essieu de roues (15 ; 16) d'un véhicule automobile avec des cibles (20) placées au niveau des roues (15, 16) à mesurer par le biais des supports de cible (19), lesdites cibles étant dotées de repères (21, 22) optiquement enregistrables et d'unités de mesure (12) présentant pour l'enregistrement des repères (21, 22) au moins un dispositif de caméra stéréo (31, 32) servant de dispositif d'enregistrement d'image, sachant qu'au moins un enregistrement stéréoscopique est enregistré lors du processus de mesure à l'aide des unités de mesure (12) d'au moins trois repères (21, 22) de la cible (20) et qu'on en déduit, à l'aide d'une unité d'analyse (13), la position dans l'espace de l'axe de rotation de roue (36) dans un système de coordonnées 3D local, à l'aide d'un procédé de traitement d'image, les unités de mesure (12) contenant, outre les agencements de caméra stéréo (31, 32), un dispositif de référencement (30) à l'aide duquel la position des unités de mesure (12) est déterminée dans un système de référence de l'endroit de mesure et un repère (22) significatif supplémentaire étant positionné sur la cible (20), en sus d'au moins deux repères (21) indéterminés, ledit repère comportant une même distance (d) par rapport à une surface de référence (27) au niveau du support de cible (19), au moins au niveau des cibles (20) des roues (15, 16) du même axe et le plan de référence pouvant être déterminé par l'unité d'analyse (13) à l'aide du repère (22) significatif et un plan médian longitudinal de véhicule pouvant être déterminé par l'unité d'analyse (13) à l'aide du plan de référence en tenant compte du système de référence de l'endroit de mesure.

8. Dispositif selon la revendication 7, **caractérisé en ce que** la distance (d) du repère (22) significatif par rapport à la surface de référence (27) est connue de l'unité d'analyse (13).

9. Dispositif selon la revendication 7 ou 8, **caractérisé en ce qu'**une distance (a) du repère (22) significatif par rapport à un plan médian de roue (35) est connue de l'unité d'analyse (13), le plan médian de roue (35) servant de plan de référence.

10. Dispositif selon la revendication 9, **caractérisé en ce que** la distance (a) se compose de la distance (d) connue du repère significatif (22) par rapport à la surface de référence (27), d'une distance (s) connue de la surface de référence (27) par rapport à un plan de fixation (29) à un support de cible (19) et à une distance (f) connue du plan de fixation (29) par rapport au plan médian de roue (35).

11. Dispositif selon la revendication 7, **caractérisé en ce que** les unités de mesure (12) sont disposées en côté au niveau des rails de roulement (11), de telle sorte que le champ de vision du dispositif de caméra stéréo (31, 32) respectif enregistre les repères (21, 22) des cibles (20) respectives.
